# EUROPÄISCHE PATENTSCHRIFT

(11) **EP 2 574 703 B1**
(45) Veröffentlichungstag und Bekanntmachung des Hinweises auf die Patenterteilung: **22.02.2017**
(21) Anmeldenummer: 12006764.0
(22) Anmeldetag: 27.09.2012
(51) Int. Cl.: E04B 1/76, F16B 13/12, F16B 13/00

(54) **Befestigungssystem für Bauteile an einem tragenden Untergrund**
Fastening system for components on a supporting base
Système de fixation pour composants sur un support porteur

(30) Priorität: 27.09.2011 DE 102011114357
(43) Veröffentlichungstag der Anmeldung: 03.04.2013
(73) Patentinhaber: RANIT-Befestigungssysteme GmbH, 45701 Herten (DE)
(72) Erfinder: Gräwe, Bernd, 45701 Herten (DE)
(74) Vertreter: Kross, Ulrich

(56) Entgegenhaltungen:
- EP-A1- 1 870 533
- EP-A2- 1 182 361
- EP-A2- 1 818 477
- EP-B1- 1 591 602
- DE-U1-202009 012 420

## Beschreibung

### 1. Gebiet der Erfindung

Die Erfindung betrifft ein Befestigungssystem für Bauteile an einem tragenden Untergrund, insbesondere für isolierenden Dämmstoff, umfassend ein Hülsenteil mit einem plattenförmigen, rotierend antreibbaren Halteteller und einem Haltetellerschaft, ein in einer Durchgangsbohrung mit seinem Kopf bis zu einer Endposition im Übergangsbereich zum Haltetellerschaft in das Hülsenteil einbringbares und in dem tragenden Untergrund mit einem Dübel verankerbares Befestigungselement, wobei das Befestigungselement als eine einen Mehrkantkopf aufweisende Schraube ausgebildet ist und innerhalb des Haltetellers eine EinschraubWerkzeugaufnahme besitzender Stopfen angeordnet ist, der in die Durchgangsbohrung des Hülsenteils hineinragt, wobei innerhalb des Hülsenteils und des Haltetellers eine Durchgangsbohrung angeordnet ist, die einen an den Mehrkantkopf der Schraube formangepassten Querschnitt aufweist, wie aus der EP 1 591 602 B1 bekannt.

Unter dem Begriff "tragender Untergrund" wird neben Fassadenwänden auch jede Art von Unterkonstruktion verstanden, auf die Bauteile, insbesondere Leichtbauteile, wie Schaumstoffkörper und wärme- bzw. schallisolierende Materialien, in Form von Platten, Paneelen, Leisten usw. montiert werden.

### 2. Stand der Technik

Derartige Befestigungssysteme finden insbesondere Verwendung zur Montage von Wärmedämm-Verbundsystemen auf einer Putzbasis zur Isolation, insbesondere bei Sanierungs- oder Renovierungsmaßnahmen von Gebäuden. Hierbei wird üblicherweise eine Isolierschicht, beispielsweise aus Polysterolplatten oder aus hochverdichteten Steinwolleplatten, auf das Mauerwerk geklebt, hier verdübelt sowie anschließend verputzt.

Ein Befestigungssystem der eingangs genannten Art ist beispielsweise durch das deutsche Gebrauchsmuster DE 20313909.7 U bekannt geworden. Der dort in das Hülsenteil eingeschraubte Gewindestopfen soll unter Berücksichtigung der Isolationswerte einen ausreichenden Korrosionsschutz gewährleisten. Denn bei solchen Befestigungssystemen bzw. Isolierplattendübeln spielt die Isolierung des den Dübel weitenden Spreizelementes unter Beachtung von geringen Wärmedurchgangswerten eine wesentliche Rolle, so dass es gilt, Kälte- oder Wärmebrücken durch das Spreizelement zu vermeiden oder zumindest den Wärmeübergangskoeffizienten auf das technisch erforderliche Minimum zu beschränken.

Hierzu ist es aus der DE 19801548 C1 bekannt, anstelle eines Befestigungssystems mit einem abgedichteten Gewindestopfen eine Schraube mit einem großen Kunststoffkopf durch Umspritzen zu versehen. Ein solches Umspritzen ist aber immer sehr aufwendig und verteuert das Produkt.

Aus der EP 1 818 477 A2 ist ein Befestigungssystem bekannt, bei dem einerseits eine Schraube ebenfalls durch Umspritzen mit Kunststoff einstückig mit einem Stopfen ausgebildet ist, wobei von dem Kunststoff nicht nur der Schraubenkopf, sondern außerdem auch noch ein Längenabschnitt eines Schaftteils der Schraube umschlossen wird. Der Stopfen besitzt eine mehrkantige Außenkontur (Sechskant). Andererseits gehört ein Hülsenteil, das einen Halteteller mit einem sich daran nach unten anschließenden Haltetellerschaft aufweist, unterteilt in einen im Durchmesser großen Stopfenaufnahmeabschnitt sowie einen demgegenüber viel kleineren Endschaft, und ein Dübel dazu. Während der Montage kommt es bei diesem System zu einem Teleskopieren, indem nämlich die in sich starre, feste Einheit aus dem Hülsenteil mit dem darin einschließlich der umschlossenen Schraube eingesetztem Stopfen im Dübelschaft verschiebbar ist.

Durch die eingangs genannte EP 1591602 B1 ist ein zum Einsatz als komplette Baueinheit vollständig vorgefertigtes Befestigungssystem bekannt geworden. Es setzt sich aus einem Hülsenteil, das einen Halteteller und einen Haltetellerschaft besitzt, und einem Dübel sowie einer in der Durchgangsbohrung des Hülsenteils angeordneten, bis in den Dübel reichenden, nagelbaren Schraube zusammen. Der Haltetellerschaft taucht in einen Schaft des Dübels ein, so dass das Hülsenteil nach dem Abreißen einer Verbindung zwischen der Dübelhülse und dem Haltetellerschaft im Dübelschaft verschiebbar bzw. teleskopierbar ist, was eine einfache Anpassung an unterschiedliche zu befestigende Materialien oder Unterkonstruktionen ermöglicht. Die Durchgangsbohrung wird oben von einem in den Halteteller eingeschraubten Gewindestopfen verschlossen.

Durch die EP 1 182 361 A2 und die EP 1 870 533 A1 sind Befestigungssysteme bekannt geworden, bei denen sich der Schaft des Druck- bzw. Haltetellers auf der Dübelhülse verschiebt.

Als problematisch beim Einsatz der bekannten Befestigungssysteme hat sich der nach dem Einsetzen in das vorgefertigte Bohrloch mit nicht vorherbestimmbarer, unterschiedlicher Länge mit seinem oberen Dübelende in den Dämmstoff vorkragende Dübel herausgestellt. Diese unbestimmte Vorkraglänge des oberen Dübelendes hängt von der unterschiedlichen Dicke des Altputzes auf dem tragenden Untergrund (der Wand) ab. Das Befestigungselement bzw. die Schraube kann bei der Montage des Befestigungssystems mitunter nicht ausreichend tief in den Spreizbereich des Dübels eindringen.

Außerdem nimmt der am unteren Ende des Gewindeabschnitts für den eingeschraubten Gewindestopfen in der dort konturangepassten Ausnehmung drehfest festgelegte, mehrkantige Kopf der Schraube dann einen zu geringen Abstand zur Ober- bzw. Außenfläche des Dämmstoffs bzw. Isoliermaterials ein, um einen ausreichenden punktbezogenen Wärmedurchgangskoeffizienten für ein Dübelsystem mit einem Spreizelement aus Metall zu gewährleisten.

### 3. Aufgabe der Erfindung

Es war somit eine Aufgabe der Erfindung, ein Befestigungssystem vorzuschlagen, dass die aus dem Stand der Technik bereits bekannt gewordenen Nachteile zu überwinden in der Lage ist. Diese Aufgabe wird im erfindungsgemäßen Sinne mit einem Befestigungssystem, umfassend die Merkmale des Anspruchs 1, gelöst. Vorteilhafte Ausgestaltungen der Erfindung sind in den abhängigen Ansprüchen niedergelegt.

### 4. Zusammenfassung der Erfindung

Gemäß der Erfindung ist mit der Rotation des Haltetellers der Mehrkantkopf und damit die Schraube teleskopartig entlang eines Hubkanals innerhalb der Durchgangsbohrung nach unten verschiebbar gelagert. Bevorzugt weist der Mehrkantkopf eine rechteckige, vorzugsweise quadratische Flächenform auf, wenn die Schraube von oben in Längsrichtung betrachtet wird. Hierdurch wird nicht nur ermöglicht, hohe Drehmomente auf die Schraube selbst aufzubringen; durch die komplementäre Ausgestaltung des Querschnitts der Durchgangsbohrung wird überdies auch ermöglicht, dass die auf die Schraube aufgebrachten Drehmomente vollständig auf das Hülsenteil und gegebenenfalls auch den Halteteller übertragen werden.

Zur Montage des vorgefertigten Befestigungssystems, bestehend aus Halteteller und Dübel mit eingesetzter Schraube und Verschlussstopfen, wird dabei vorzugsweise das Montagewerkzeug, insbesondere ein Schraubendreher, in die Einschraub-Werkzeugaufnahme des Stopfens bzw. Verschlussstopfens eingesetzt. Mit der Rotation des Haltetellers teleskopiert der Mehrkantschraubkopf und damit die Schraube in dem Hubkanal nach unten, wobei gleichzeitig die Schraube in den Dübel gezogen wird und diesen aufspreizt.

Bevorzugt wird überdies, wenn das Befestigungssystem mit einem nach oben bzw. außen abschließenden Stopfen ausgebildet ist, dessen Flächenform vorzugsweise ebenfalls an den Mehrkantkopf der Schraube angepasst ist.

Das Befestigungssystem weist vorzugsweise zusätzlich einen Dübel mit einer Aufnahme für die Schraube auf. Hierdurch wird mit einfachen Mitteln eine feste Verankerung des Befestigungssystems mit dem Untergrund und somit auch des isolierenden Dämmstoffs auf dem tragenden Untergrund ermöglicht.

Die Erfindung ist für Verwendungen vorgesehen, bei denen Anforderungen an die Nutzungssicherheit im Sinne der wesentlichen Anforderungen 4 der Richtlinie 89/106/EWG zu erfüllen sind und bei denen ein Versagen der Verankerungen zu einer geringen Gefahr für Leben oder Gesundheit von Menschen führt. Das erfindungsgemäße Befestigungssystem wird daher vorzugsweise als Mehrfachbefestigung für die Verankerung von verklebten Wärmedämm-Verbundsystemen nach ETAG 004 im Beton oder Mauerwerk verwendet. Der Verankerungsgrund besteht vorzugsweise aus bewehrtem oder unbewehrtem Normalbeton oder aus Mauerwerkswänden oder purem Beton. Das erfindungsgemäße Befestigungssystem dient dabei vorzugsweise der Übertragung von Windsoglasten, wobei die Eigenlasten des Wärmedämm-Verbundsystems üblicherweise bereits von einer Verklebung des Wärmedämm-Verbundsystems auf dem Untergrund aufgenommen werden. Vorzugsweise beträgt die Nutzungsdauer des erfindungsgemäßen Befestigungssystems mindestens 25 Jahre.

Die oben beschriebenen Kennwerte werden insbesondere dann erreicht, wenn der Dübel an seinem der Schraube zugewandten Ende, vorzugsweise mit einem größeren, aus dem Altputz und Kleber in den Dämmstoff hineinragenden Durchmesserbereich des Dübels im Übergang zum Altputz des tragenden Untergrunds mit Mitdrehsperren ausgebildet ist, die vorzugsweise in der Form von umfangsverteil angeordneten, axial verlaufenden Stegen bzw. Flügeln vorgesehen sind.

Sobald der Schraubenkopf die untere Auflagefläche in dem Hülsenteil im Übergang zum Haltetellerschaft erreicht hat, wird der Halteteller bzw. das Hülsenteil drehend tiefer in den Dämmstoff gezogen. Die Mitdrehsperren am oberen Dübelende gewährleisten dabei, dass der Dübel vorzugsweise seine Position in dem Dämmmaterial beibehält und sich weder drehen noch weiter nach unten verlagern kann. Dies wird insbesondere dann unterstützt, wenn der Dübel an seinem der Schraube zugewandten Ende eine Aufnahme für zumindest eine Teillänge des Hülsenteils aufweist. Hierdurch wird ein besonders stabiles Befestigungssystem erhalten, das im montierten Zustand besonders hohe Seitenkräfte aufzunehmen in der Lage ist.

Das Hülsenteil mit dem Halteteller kann sowohl mit der Dämmstoffoberfläche abschließend als auch in den Dämmstoff versenkt montiert werden. Im letzteren Fall wird das Senkloch von einer nachträglich oder direkt mit dem Montagetool einzubringenden Abdeckrondelle verschlossen. Der Schraubenkopf kann auf jeden Fall mit einem in Bezug auf die Dämmstoffoberfläche so großen Abstand von beispielsweise mehr als 50 mm in den Dämmstoff eingebracht werden, dass ein Wärmedurchgangskoeffizient (Chi-Wert) von 0,001 W/K erreicht werden kann. Besonders bevorzugt wird, wenn das erfindungsgemäße Befestigungssystem bei bündiger Montage und einer Dämmstoffdicke von 60 bis 360 mm einen punktbezogenen Wärmedurchgangskoeffizienten von höchstens 0,002 W/K aufweist. Ebenso wird bei versenkter Montage und einer Dämmstoffdicke von 80 bis 380 mm bevorzugt, wenn das erfindungsgemäße Befestigungssystem einen punktbezogenen Wärmedurchgangskoeffizienten von höchstens 0,001 W/K aufweist.

Das erfindungsgemäße Befestigungssystem ist in der Lage, die an den bevorzugten Einbauzustand geforderten Normstandards zu erfüllen. Besonders bevorzugt wird, wenn der Halteteller eine Tragfähigkeit von wenigstens 2,0 kN, vorzugsweise 2,5 kN, und eine Tellersteifigkeit von wenigstens 0,5 kN, vorzugsweise > 1,0 kN, gemessen unter Durchführung der Prüfstandards ETAG 014, TA 025 (Wärmedämmung) und TA 026, aufweist. Hierdurch wird die Belastbarkeit des erfindungsgemäßen Befestigungssystems insbesondere im Hinblick auf die auftretenden Windsoglasten dauerhaft gewährleistet. Hierdurch wird ermöglicht, weniger Dübel pro Flächeneinheit als mit bisher üblichen Befestigungssystemen mit geringeren Tragfähigkeiten und Steifigkeiten zu verwenden

Besonders bevorzugt wird in diesem Zusammenhang, wenn der Hülsenteil aus Polypropylen, der Stopfen aus Polyamid, vorzugsweise Polyamid 6.6 GF, und die Schraube aus galvanisch verzinktem Stahl gefertigt sind. Hierdurch wird eine Materialkombination geschaffen, die sowohl ausreichend korrosionsbeständig ist als auch in der Lage ist, den bei der Montage und dem dauerhaften Einsatz auftretenden Kräften zu widerstehen.

Gemäß der Erfindung können der Haltetellerschaft und das Hülsenteil aus zwei miteinander verbindbaren Teilstücken bestehen. Bevorzugt wird jedoch, wenn der Haltetellerschaft und das Hülsenteil einstückig ausgebildet sind, wodurch nicht nur die Fertigung des erfindungsgemäßen Befestigungssystems erleichtert wird, sondern auch die Übertragung von Drehmomenten auf die Schraube und den Halteteller besonders vorteilhaft unterstützt wird.

Es wird zudem bevorzugt, wenn im Übergangsbereich von Haltetellerschaft und Hülsenteil ein nach außen hervorstehender Absatz ausgebildet ist. Ebenso wird bevorzugt, wenn im Hülsenteil, vorzugsweise auf halber Länge des Hubkanals innerhalb des Hülsenteils, ein nach außen hervorstehender Absatz ausgebildet ist. Durch diese Absätze, die vorzugsweise so gestaltet sind, dass in Einschraubrichtung der Schraube eine Verdickung des Außendurchmessers innerhalb des Hülsenteils erreicht wird, wird mit besonders einfachen Mitteln erreicht, dass vor Einschrauben der Schraube das erfindungsgemäße Befestigungssystem nur bis zu dem ersten oder zweiten Absatz innerhalb des Hülsenteils eingesetzt wird, und dann das bündige Ansetzen des Tellers beispielsweise bei einer Normdicke von 100 mm Dämmmaterial nach dem Montieren erreicht wird und das Versenken des Tellers um die Höhe bis zum zweiten Absatz bei beispielsweise 120 mm Dicke des Dämmmaterials erreicht wird. Hierdurch wird somit mit besonders einfachen Mitteln ein Befestigungssystem geschaffen, dessen Montage ohne die Notwendigkeit des vorherigen Messens beim Ansetzen des Befestigungssystems besonders vereinfacht wird.

Besonders bevorzugt wird zudem, wenn das erfindungsgemäße Befestigungssystem das Einbringen von Verlängerungselementen, beispielsweise im Baukastensystem für unterschiedliche Dämmwandstärken, ermöglicht. Dies kann bevorzugt mit gleichem Halteteller und Hülsenteil sowie Dübel erreicht werden, wobei bei höheren Dämmwandstärken nur eine längere Schraube und ein darauf angepasstes Zusatz-Verlängerungselement für den Hülsenteil eingesetzt werden. Hierdurch wird ein besonders flexibles System geschaffen, das mit geringstmöglichem Aufwand auf unterschiedliche Dämmwandstärken umrüstbar ist.

### 5. Kurze Beschreibung der Figuren

Weitere Merkmale und Einzelheiten der Erfindung ergeben sich aus dem in den Zeichnungen dargestellten Ausführungsbeispielen. Es zeigen:
- Figur 1:: In einem Teillängsschnitt eine Gesamtansicht einer vorgefertigten Einheit eines Befestigungssystems mit einem Dübel zur Wandverankerung;
- Figur 2:: In einem Längsschnitt als Einzeleinheit der Figur 1 das Hülsenteil mit dem Halteteller;
- Figur 3:: Das Hülsenteil aus Figur 2 in der Draufsicht;
- Figur 4:: Als Einzeleinheit einen Verschlussstopfen in einer Längsansicht und in der Draufsicht;

- Figur 5:: Ein innerhalb eines Wärmedämm-Verbundsystems montiertes Befestigungssystem nach Figur 1 im Zustand vor dem Verschrauben; und
- Figur 6:: Das Befestigungssystem aus Figur 1 im Zustand nach erfolgter, fertiger Montage.

### 6. Detaillierte Beschreibung der Zeichnungen

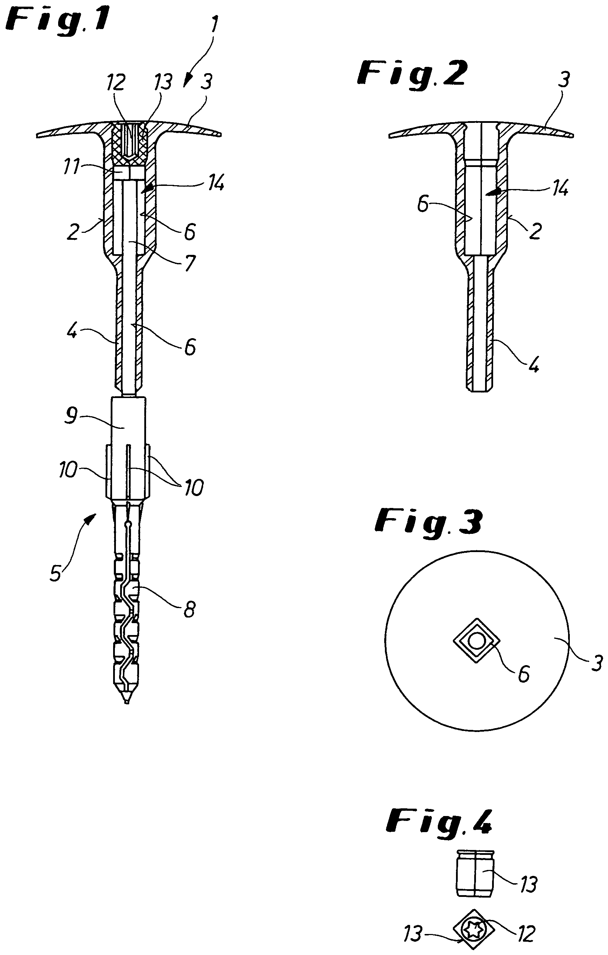

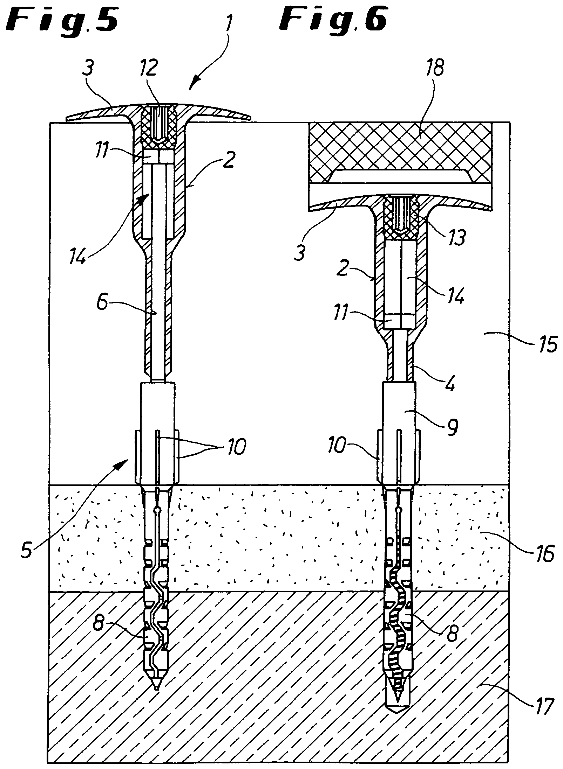

Ein in Figur 1 dargestelltes, zum Einsatz als komplette Baueinheit vollständig vorgefertigtes Befestigungssystem 1 setzt sich aus einem Hülsenteil 2, das einen Halteteller 3 und einen Haltetellerschaft 4 besitzt, zusammen. Zusätzlich ist ein Dübel 5 sowie eine in einer Durchgangsbohrung 6 des Hülsenteils 2 angeordnete, bis in den Dübel 5 reichende Schraube 7 als Befestigungselement vorgesehen. Der Dübel 5 ist mit einem gegenüber seinem voreigenen Spreizbereich 8 im Durchmesser größeren Dübelende 9 ausgebildet. Das Dübelende 9 ist mit flügel- bzw. stegartigen, umfangsverteilt in Axialrichtung verlaufenden Mitdrehsperren 10 versehen, die im Übergang zum Spreizbereich 8 enden. Die Durchgangsbohrung 6 ist der Form des Schraubenkopfes 11 angepasst, mehrkantig, je quadratisch ausgebildet und weist oben einen formangepassten mehrkantigen, eine EinschraubWerkzeugaufnahme 12 besitzenden Verschlussstopfen 13 (vergleiche auch die Figuren 3 und 4) auf. In dem sich unterhalb des Verschlussstopfens 13 anschließenden Bereich des Hülsenteils 2 stellt die Durchgangsbohrung 6 einen Hubkanal 14 für die Schrauben 7 bereit; wenn der Halteteller 3 bzw. das Hülsenteil 2 in Drehung versetzt werden, kann sich der Schraubenkopf 11 teleskopartig in den Hubkanal 14 bis zu seiner in Figur 6 gezeigten Endlage nach unten bewegen. Danach kann der Halteteller 3 weiter in das Dämmmaterial versenkt werden (vergleiche Figur 6), wobei die Mitdrehsperrungen 10 den Dübel 5 in seiner Position in dem Dämmstoff bzw. Isoliermaterial 15 halten.

Der Figur 5 lässt sich das in ein Bohrloch des Dämmstoffs 15 einschließlich Altputz- und Kleberschicht 16 sowie tragendem Untergrund 17 eingesetzten Befestigungssystem 1 vor dem Verschrauben entnehmen. Die Endmontage ist in Figur 6 dargestellt. Der Schraubenkopf 11 hat sich in dem Hubkanal 14 bis in seine Endlage in Drehrichtung nach unten bewegt, so dass die Schraube 7 den Spreizbereich 8 des Dübels 5 aufgeweitet hat. Bei weiterer Drehbeaufschlagung des Hülsenteils 2 dreht sich danach der Halteteller 3 zusammen mit der Schraube 7 weiter in den Dämmstoff 15 hinein, bis entweder zum bündigen Abschluss des Haltetellers 3 mit der äußeren Oberfläche des Dämmstoffs 15 oder - wie in Figur 6 dargestellt - bis in eine in den Dämmstoff 15 versenkte Endlage hinein. Das Senkloch wird in diesem Fall durch eine Abdeckrondelle 18 verschlossen.

### Bezugszeichenliste:

1 Befestigungssystem
2 Hülsenteil
3 Halteteller
4 Haltetellerschaft
5 Dübel
6 Durchgangsbohrung
7 Schraube
8 Spreizbereich
9 Dübelende
10 Mitdrehsperre
11 Mehrkantkopf
12 Einschraubwerkzeugaufnahme
13 Verschlussstopfen
14 Hubkanal
15 Dämmstoff
16 Altputz- und Kleberschicht
17 Untergrund
18 Abdeckrondelle

## Patentansprüche

1. Befestigungssystem (1) für Bauteile an einem tragenden Untergrund (17), insbesondere für isolierenden Dämmstoff (15), umfassend ein Hülsenteil (2) mit einem plattenförmigen, rotierend antreibbaren Halteteller (3) und einem Haltetellerschaft (4), ein in einer Durchgangsbohrung (6) mit seinem Kopf (11) bis zu einer Endposition im Übergangsbereich zum Haltetellerschaft (4) in das Hülsenteil (2) einbringbares und in dem tragenden Untergrund verankerbares Befestigungselement, wobei das Befestigungselement als eine einen Mehrkantkopf (11) aufweisende Schraube (7) ausgebildet ist und innerhalb des Haltetellers (3) eine Einschraub-Werkzeugaufnahme (12) besitzender Stopfen (13) angeordnet ist, der in die Durchgangsbohrung (6) des Hülsenteils (2) hineinragt, wobei innerhalb des Hülsenteils (2) und des Haltetellers (3) eine Durchgangsbohrung (6) angeordnet ist, die einen an den Mehrkantkopf (11) der Schraube (7) formangepassten Querschnitt aufweist, **dadurch gekennzeichnet, dass** mit der Rotation des Haltetellers (3) der Mehrkantkopf (11) und damit die Schraube (7) teleskopartig entlang eines Hubkanals (14) innerhalb der Durchgangsbohrung (6) nach unten verschiebbar gelagert ist.

2. Befestigungssystem (1) nach Anspruch 1, **dadurch gekennzeichnet, dass** der Mehrkantkopf (11) eine rechteckige, vorzugsweise quadratische, Flächenform aufweist.

3. Befestigungssystem (1) nach einem der vorhergehenden Ansprüche, **dadurch gekennzeichnet, dass** die Flächenform des Stopfens (13) auf die Flächenform des Mehrkantkopfs (11) angepasst ist.

4. Befestigungssystem (1) nach einem der vorhergehenden Ansprüche, **dadurch gekennzeichnet, dass** es zusätzlich einen Dübel (5) mit einer Aufnahme für die Schraube (7) aufweist.

5. Befestigungssystem (1) nach Anspruch 4, **dadurch gekennzeichnet, dass** der Dübel (5) an seinem der Schraube (7) zugewandten Ende mit Mitdrehsperren (10), vorzugsweise in der Form von umfangsverteilt angeordneten, axial verlaufenden Stegen bzw. Flügeln, versehen ist.

6. Befestigungssystem (1) nach Anspruch 4 oder 5, **dadurch gekennzeichnet, dass** der Dübel (5) an seinem der Schraube (7) zugewandten Ende eine Aufnahme für zumindest eine Teillänge des Hülsenteils (2) aufweist.

7. Befestigungssystem (1) nach einem der vorhergehenden Ansprüche, **dadurch gekennzeichnet, dass** der Haltetellerschaft (4) und das Hülsenteil (2) einstückig ausgebildet sind.

8. Befestigungssystem (1) nach einem der vorhergehenden Ansprüche, **dadurch gekennzeichnet, dass** im Übergangsbereich von Haltetellerschaft (4) und Hülsenteil (2) ein nach außen hervorstehender Absatz ausgebildet ist.

9. Befestigungssystem (1) nach einem der vorhergehenden Ansprüche, **dadurch gekennzeichnet, dass** im Hülsenteil (2), vorzugsweise auf halber Länge des Hubkanals (14), ein nach außen hervorstehender Absatz ausgebildet ist.

10. Befestigungssystem (1) nach einem der vorhergehenden Ansprüche, **dadurch gekennzeichnet, dass** Verlängerungsstücke für das Hülsenteil (2) mit dem Befestigungssystem (1) verbindbar sind und das Befestigungssystem (1) zur Aufnahme von Schrauben (7) unterschiedlicher Länge ausgebildet ist.

11. Befestigungssystem (1) nach einem der vorhergehenden Ansprüche, **dadurch gekennzeichnet, dass** der Hülsenteil (2) aus Polypropylen, der Stopfen (13) aus Polyamid, vorzugsweise Polyamid 6.6 GF, und die Schraube (7) aus galvanisch verzinktem Stahl gefertigt sind.

12. Befestigungssystem (1) nach einem der vorhergehenden Ansprüche, **dadurch gekennzeichnet, dass** es bei versenkter Montage und einer Dämmstoffdicke von 80 bis 380 mm einen punktbezogenen Wärmedurchgangskoeffizienten von höchstens 0,001 W/K aufweist.

13. Befestigungssystem (1) nach einem der vorhergehenden Ansprüche, **dadurch gekennzeichnet, dass** es bei bündiger Montage und einer Dämmstoffdicke von 60 bis 360 mm einen punktbezogenen Wärmedurchgangskoeffizienten von höchstens 0,002 W/K aufweist.

14. Befestigungssystem (1) nach einem der vorhergehenden Ansprüche, **dadurch gekennzeichnet, dass** der Halteteller (3) eine Tragfähigkeit von wenigstens 2,0 kN, vorzugsweise wenigstens 2,5 kN, und eine Tellersteifigkeit von wenigstens o,5 kN, vorzugsweise > 1,0 kN, aufweist.

## Claims

1. A fastening system (1) for components on a supporting substructure (17), particularly for insulating material (15), comprising a sleeve part (2) with a plate-shaped retaining disk (3), which can be rotationally driven, and a retaining disk shaft (4), as well as a fastening element that can be introduced into a through-bore (6) in the sleeve part (2) until its head (11) reaches an end position in the transition area to the retaining disk shaft (4) and thereby anchored in the supporting substructure, wherein the fastening element is realized in the form of a screw (7) with a polygonal head (11) and a plug (13), which features a screw-driving tool receptacle (12) and protrudes into the through-bore (6) of the sleeve part (2), is arranged within the retaining disk (3), and wherein a through-bore (6) is arranged within the sleeve part (2) and the retaining disk (3) and the cross section of said through-bore is adapted to the shape of the polygonal head (11) of the screw (7),
**characterized in that**
the polygonal head (11) and therefore the screw (7) can be telescopically displaced downward along a stroke channel (14) within the through-bore (6) by rotating the retaining disk (3).

2. The fastening system (1) according to claim 1, **characterized in that** the polygonal head (11) has a rectangular surface shape, preferably a square surface shape.

3. The fastening system (1) according to one of the preceding claims, **characterized in that** the surface shape of the plug (13) is adapted to the surface shape of the polygonal head (11).

4. The fastening system (1) according to one of the preceding claims, **characterized in that** it additionally features a screw anchor (5) with a receptacle for the screw (7).

5. The fastening system (1) according to claim 4, **characterized in that** the screw anchor (5) is provided with rotary locks (10), which are preferably realized in the form of circumferentially distributed and axially extending webs or blades, on its end facing the screw (7).

6. The fastening system (1) according to claim 4 or 5, **characterized in that** the screw anchor (5) features a receptacle for accommodating at least part of the length of the sleeve part (2) on its end facing the screw (7).

7. The fastening system (1) according to one of the preceding claims, **characterized in that** the retaining disk shaft (4) and the sleeve part (2) are realized integrally.

8. The fastening system (1) according to one of the preceding claims, **characterized in that** an outwardly protruding shoulder is formed in the transition area between the retaining disk shaft (4) and the sleeve part (2).

9. The fastening system (1) according to one of the preceding claims, **characterized in that** an outwardly protruding shoulder is formed in the sleeve part (2), preferably at half the length of the stroke channel (14).

10. The fastening system (1) according to one of the preceding claims, **characterized in that** extension pieces for the sleeve part (2) can be connected to the fastening system (1) and the fastening system (1) is designed for accommodating screws (7) of different lengths.

11. The fastening system (1) according to one of the preceding claims, **characterized in that** the sleeve part (2) consists of polypropylene, the plug (13) consists of polyamide, preferably polyamide 6.6 GF, and the screw (7) consists of electrogalvanized steel.

12. The fastening system (1) according to one of the preceding claims, **characterized in that** it has a local heat transfer coefficient of no more than 0.001 W/K when it is installed in a recessed fashion and the insulating material has a thickness of 80 to 380 mm.

13. The fastening system (1) according to one of the preceding claims, **characterized in that** it has a local heat transfer coefficient of no more than 0.002 W/K when it is installed in a flush fashion and the insulating material has a thickness of 60 to 360 mm.

14. The fastening system (1) according to one of the preceding claims, **characterized in that** the retaining disk (3) has a carrying capacity of at least 2.0 kN, preferably at least 2.5 kN, and a disk rigidity of at least 0.5 kN, preferably > 1.0 kN.

## Revendications

1. Système de fixation (1) de pièces de construction à un soubassement porteur (17), en particulier pour matériau isolant (15), comprenant une pièce en manchon (2) avec un plateau de retenue en forme de plaque pouvant être entraîné en rotation (3) et un arbre de plateau de retenue (4), un élément de fixation pouvant être introduit dans un trou traversant (6) par sa tête (11) jusqu'à une position terminale dans la zone de transition vers l'arbre de plateau de retenue (4) dans l'élément en manchon (2) et pouvant être ancré dans le soubassement porteur, l'élément de fixation étant réalisé sous forme d'une vis (7) présentant une tête polygonale (11) et étant disposé, dans le plateau de retenue (3), un bouchon (13) possédant un support d'outil de vissage (12) qui rentre dans le trou traversant (6) de l'élément en manchon (2),
étant pratiqué dans la pièce en manchon (2) et le plateau de retenue (3) un trou traversant (6) qui présente une section transversale dont la forme est adaptée à la tête polygonale (11) de la vis (7), **caractérisé en ce que**,
sous la rotation du plateau de retenue (3), la tête polygonale (11) et ainsi la vis (7) s'appuient de manière télescopique avec faculté de déplacement vers le bas le long d'un canal de levage (14) dans le trou traversant (6).

2. Système de fixation (1) selon la revendication 1, **caractérisé en ce que** la tête polygonale (11) présente une forme superficielle rectangulaire, de préférence quadrangulaire.

3. Système de fixation (1) selon une des revendications précédentes, **caractérisé en ce que** la forme superficielle du bouchon (13) est adaptée à la forme superficielle de la tête polygonale (11).

4. Système de fixation (1) selon une des revendications précédentes, **caractérisé en ce qu'**il présente en outre une cheville (5) avec un support pour la vis (7).

5. Système de fixation (1) selon la revendication 4, **caractérisé en ce que** la cheville (5) est pourvue, à son extrémité tournée vers la vis (7), de tourniquets (10), de préférence sous la forme de brides et d'ailettes disposées réparties sur la circonférence et orientées axialement.

6. Système de fixation (1) selon la revendication 4 ou 5, **caractérisé en ce que** la cheville (5) présente, à son extrémité tournée vers la vis (7), un support pour au moins une partie de la longueur de l'élément en manchon (2).

7. Système de fixation (1) selon une des revendications précédentes, **caractérisé en ce que** l'arbre du plateau de retenue (4) et l'élément en manchon (2) sont réalisés en une seule pièce.

8. Système de fixation (1) selon une des revendications précédentes, **caractérisé en ce que**, dans la zone de transition entre l'arbre de plateau de retenue (4) et l'élément en manchon (2), un talon saillant vers l'extérieur est réalisé.

9. Système de fixation (1) selon une des revendications précédentes, **caractérisé en ce que**, dans l'élément en manchon (2), de préférence à mi- longueur du canal de levage (14), un talon saillant vers l'extérieur est réalisé.

10. Système de fixation (1) selon une des revendications précédentes, **caractérisé en ce que** des pièces de prolongement pour l'élément en manchon (2) peuvent être raccordées au système de fixation (1) et que le système de fixation (1) est conçu pour recevoir des vis (7) de longueur différente.

11. Système de fixation (1) selon une des revendications précédentes, **caractérisé en ce que** l'élément en manchon (2) est fabriqué en polypropylène, le bouchon (13) en polyamide, de préférence du polyamide 6.6 GF, et la vis (7) en acier zingué par galvanisation.

12. Système de fixation (1) selon une des revendications précédentes, **caractérisé en ce que**, en cas de montage noyé et d'une épaisseur du matériau isolant de 80 à 380 mm, il présente un coefficient de transfert thermique de référence d'au plus 0,001 W/K.

13. Système de fixation (1) selon une des revendications précédentes, **caractérisé en ce que**, en cas de montage noyé et d'une épaisseur du matériau isolant de 60 à 360 mm, il présente un coefficient de transfert thermique de référence d'au plus 0,002 W/K.

14. Système de fixation (1) selon une des revendications précédentes, **caractérisé en ce que** le plateau de retenue (3) présente une capacité de charge d'au moins 2,0 kN, de préférence d'au moins 2,5 kN, et une rigidité de plateau d'au moins 0,5 kN, de préférence > 1,0 kN.
